# EUROPEAN PATENT SPECIFICATION

(11) **EP 4 529 545 B1**
(45) Date of publication and mention of the grant of the patent: **18.03.2026**
(21) Application number: 23736557.2
(22) Date of filing: 16.05.2023
(51) Int. Cl.: C08G 77/08, C07F 9/02

(54) **CURABLE POLYORGANOSILOXANE COMPOSITION INCLUDING A PHOSPHONIUM SALT AND METHODS FOR THE PREPARATION AND USE THEREOF**
HÄRTBARE POLYORGANOSILOXANZUSAMMENSETZUNG MIT EINEM PHOSPHONIUMSALZ UND VERFAHREN ZUR HERSTELLUNG UND VERWENDUNG DAVON
COMPOSITION DE POLYORGANOSILOXANE DURCISSABLE COMPRENANT UN SEL DE PHOSPHONIUM ET SES PROCÉDÉS DE PRÉPARATION ET D'UTILISATION

(30) Priority: 15.06.2022 US 202263352312 P
(43) Date of publication of application: 02.04.2025
(73) Proprietor: DOW GLOBAL TECHNOLOGIES LLC, Midland, MI 48641-1967 (US); Dow Silicones Corporation, Midland, Michigan 48641-1967 (US)
(72) Inventor: MAAR, Ryan, Midland, Michigan 48667 (US); COURTEMANCHE, Marc-Andre, Midland, Michigan 48686-0994 (US); BEDARD, Anne-Catherine, Midland, Michigan 48667 (US)
(74) Representative: Elkington and Fife LLP
(86) International application number: PCT/US2023/067030
(87) International publication number: WO 2023/244888

(56) References cited:
- WO-A1-2020/247332

## Description

### TECHNICAL FIELD

A curable polyorganosiloxane composition and methods for the preparation and cure thereof is provided. More particularly, the curable polyorganosiloxane composition includes a phosphonium catalyst, a polyorganohydrogensiloxane and a hydrocarbonoxy-functional organosilicon compound.

### INTRODUCTION

Silyl hydride (Si-H) and silyl ether (Si-OR, where R is, e.g., methyl) moieties are known to react in the presence of a strong Lewis acid catalyst to produce siloxane and R-H in what has become known as a Piers-Rubinsztajn ("PR") reaction. Use of the PR reaction can be desirable for curing siloxanes in coating, adhesive, elastomer and foaming applications, for instance in WO 2020/247332 A1. However, these reactions are notoriously rapid. Therefore, PR reaction systems are typically two-part systems where the catalyst is kept apart from the Si-OR until reaction is desired. It is desirable if PR-type reaction components could be stored together in a one-part system in a way that provided shelf stability for storage but had a way to trigger the PR-type reaction when desired to cure the system. There are systems where the Lewis acid catalyst is complexed with an ultraviolet (UV) sensitive blocker that precludes the catalyst from enabling a PR-type reaction until irradiated with UV light. However, such systems need to be stored in the dark for shelf stability and must be exposed to UV light to initiate curing. Release of the Lewis acid upon exposure to UV light tends to be slow, resulting in a slowly initiated reaction upon exposure to UV light. Applications of UV-blocked Lewis acids require triggering thin films so the UV light can effectively penetrate into the composition and to achieve high surface area exposure. Therefore, UV blocking of Lewis acids has shortcomings when desiring a composition that does not need to remain hidden from UV light exposure prior to initiating the Lewis acid catalyzed reaction, rapid initiation of the reaction (rapid release of the Lewis acid), and/or an ability to rapidly trigger reactions in bulk compositions.

### SUMMARY

A curable polyorganosiloxane composition (composition) comprises a mixture of (A) a phosphonium catalyst; (B) a polyorganohydrogensiloxane; and (C) a hydrocarbonoxy-functional organosilicon compound. Methods for preparing and curing the composition are provided.

### DETAILED DESCRIPTION

The composition introduced above may be a one part composition. The composition comprises the mixture of (A) the phosphonium catalyst; (B) the polyorganohydrogensiloxane; and (C) the hydrocarbonoxy-functional organosilicon compound. The phosphonium catalyst comprises a cationic salt of phosphorus and a non-coordinating anion.

### Starting Material (A) Phosphonium Catalyst

Starting material (A) used herein is a phosphonium catalyst, which comprises (i) a tetravalent monocation of phosphorus and (ii) a non-coordinating anion. The tetravalent monocation of phosphorus is a Lewis acidic phosphorus cation of formula (i-1):
[PR¹₃R²]⁺, where each R¹ is an independently selected halogenated aryl group, and each R² is independently selected from the group consisting of a halogen atom and an electron withdrawing group. The halogenated aryl group R¹ may have formula: 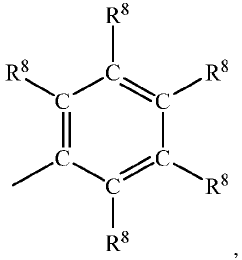 where each R⁸ is independently selected from H, X, and a group of formula -CX₃, where each X is an independently selected halogen; with the proviso that at least one R⁸ is not H. Each X may be independently selected from chlorine (Cl) or fluorine (F). Alternatively, each X may be F. Alternatively, each R⁸ may be independently selected from the group consisting of H, Cl, F, and a group of formula -CF₃, with the proviso that at least one R⁸ is Cl, F, or -CF₃.

The halogen atom for R² may be selected from the group consisting of bromine (Br), Cl, and F; alternatively Cl and F. Alternatively, the halogen atom for R² may be F. The electron withdrawing group for R² may comprise, bonded to P, an atom with an electronegativity ≥ 2.5, such as carbon (C) or oxygen (O). Alternatively, the electron withdrawing group may have formula -CX'₃, where X' is a halogen atom selected from Br, Cl, or F; alternatively Cl or F; and alternatively F. Alternatively, the electron withdrawing group for R² may have formula -CF₃. Alternatively, the electron withdrawing group for R² may have formula -OR⁹, where R⁹ is alkyl or aryl. Suitable alkyl groups for R⁹ may be linear, branched, cyclic, or combinations of two or more thereof. The alkyl groups are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl, undecyl, and octadecyl (and branched isomers having 5 to 18 carbon atoms), and the alkyl groups are further exemplified by cycloalkyl groups such as cyclopropyl, cyclobutyl, cyclopentyl, and cyclohexyl. Suitable aryl groups for R⁹ may be monocyclic or polycyclic and may have pendant hydrocarbyl groups. For example, the aryl groups for R⁹ include phenyl, tolyl, xylyl, and naphthyl and further include aralkyl groups such as benzyl, 1-phenylethyl and 2-phenylethyl. Alternatively, the aryl group for R⁹ may be monocyclic, such as phenyl, tolyl, or benzyl; alternatively the aryl group for R⁹ may be phenyl.

Alternatively, in formula (i-1), each R¹ may be a fluorinated aryl group. Alternatively, in formula (i-1), R² may be F. Alternatively, (i) the tetravalent monocation of phosphorus may have formula: [P(C₆F₅)₃F]⁺.

In addition to (i) the tetravalent monocation of phosphorus, (A) the phosphonium catalyst further comprises (ii) the non-coordinating anion introduced above. The non-coordinating anion may have a charge that is delocalized over the surface of the anion, rather than localized at a specific atom. Suitable non-coordinating anions include trifluoromethane sulfonate (triflate) of formula [CF₃SO₃]⁻ and an anion of formula [BR³₄]⁻, where each R³ is independently selected from the group consisting of a monovalent hydrocarbon group and a monovalent halogenated hydrocarbon group. The monovalent hydrocarbon group may be an alkyl group or an aryl group. The monovalent halogenated hydrocarbon group may be an alkyl group or an aryl group where one or more hydrogen atoms has been replaced with F, Cl, or Br.

Suitable alkyl groups for R³ may be linear, branched, cyclic, or combinations of two or more thereof. The alkyl groups for R³ are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl, undecyl, and octadecyl (and branched isomers having 5 to 18 carbon atoms), and the alkyl groups are further exemplified by cycloalkyl groups such as cyclopropyl, cyclobutyl, cyclopentyl, and cyclohexyl. Suitable halogenated alkyl groups include chlorinated alkyl groups such as chloromethyl and chloropropyl groups; fluorinated alkyl groups such as fluoromethyl, difluoromethyl, trifluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; chlorinated cycloalkyl groups such as 2,2-dichlorocyclopropyl, 2,3-dichlorocyclopentyl; and fluorinated cycloalkyl groups such as 2,2-difluorocyclopropyl, 2,3-difluorocyclobutyl, 3,4-difluorocyclohexyl, and 3,4-difluoro-5-methylcycloheptyl.

Suitable aryl groups for R³ may be monocyclic or polycyclic and may have pendant hydrocarbyl groups. For example, the aryl groups for R³ include phenyl, tolyl, xylyl, and naphthyl and further include aralkyl groups such as benzyl, 1-phenylethyl and 2-phenylethyl. Alternatively, the aryl group for R³ may be monocyclic, such as phenyl, tolyl, or benzyl; alternatively the aryl group for R³ may be phenyl. The halogenated aryl group for R³ may be as described above for R¹.

Alternatively, the non-coordinating anion may be fully saturated and have no free valence electron to engage in a covalent or dative bond with the phosphonium. The fully saturated anion may have formula [BR³₄]⁻, where each R³ is independently selected from the group consisting of a monovalent hydrocarbon group and a monovalent halogenated hydrocarbon group, as described above. Alternatively, each R³ may be a halogenated aryl group. Alternatively, the anion may have formula [B(C₆F₅)₄]⁻.

Alternatively, (A) the catalyst may have formula:

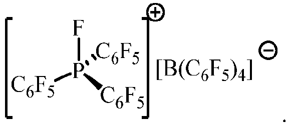

Starting material (A) may be prepared by methods known in the art, such as those disclosed in Science 2013, 341, 1374-1377 by varying appropriate starting materials. Starting material (A) used herein may be any one of the catalysts described above, or a combination of two or more of the catalysts described above.

The composition described herein contains a sufficient amount of (A) the catalyst to cure the composition. The exact amount of (A) the catalyst depends on various factors including the selection of (B) the polyorganohydrogensiloxane, the SiH content, and the selection and amount of (C) the hydrocarbonoxy-functional organosilicon compound. However, the composition may contain enough catalyst to provide a concentration of tetravalent monocation of phosphorus that may be at least 1 ppm, alternatively at least 2 ppm, alternatively at least 5 ppm; while at the same time the amount may be up to 1,000 ppm, alternatively up to 500 ppm, alternatively up to 100 ppm, and alternatively up to 50 ppm; each based on combined weights of starting materials (A), (B), and (C). Alternatively, the amount of (A) the phosphonium catalyst may be 1 ppm to 1,000 ppm, alternatively 2 ppm to 500 ppm, alternatively 5 ppm to 100 ppm, and alternatively 10 ppm; based on combined weights of (A) the catalyst, (B) the polyorganohydrogensiloxane, and (C) the hydrocarbonoxy-functional organosilicon compound in the composition.

### Starting Material (B) Polyorganohydrogensiloxanes

The composition described herein further comprises (B) a polyorganohydrogensiloxane. The polyorganohydrogensiloxane has at least one Si-H moiety per molecule. Alternatively, the polyorganohydrogensiloxane may have more than one Si-H moiety per molecule. Polyorganohydrogensiloxanes having multiple Si-H moieties per molecule (e.g., 2 or more, alternatively 3 or more) are useful as crosslinkers in the composition described herein because they are capable of reacting with multiple hydrocarbonoxy-functional moieties of starting material (C).

The polyorganohydrogensiloxane may comprise two or more siloxane units selected from the group consisting of HR⁴₂SiO_{1/2}, R⁴₃SiO_{1/2}, HR⁴SiO_{2/2}, R⁴₂SiO_{2/2}, R⁴SiO_{3/2}, HSiO_{3/2} and SiO_{4/2} units; wherein each R⁴ is an independently selected monovalent hydrocarbon group, which is free of aliphatic unsaturation; with the proviso that at least one unit, per molecule, contains an Si-H moiety (i.e., at least one of HR⁴₂SiO_{1/2}, HR⁴SiO_{2/2}, and HSiO_{3/2} is present in the polyorganohydrogensiloxane). The monovalent hydrocarbon group, which is free of aliphatic unsaturation, may be an alkyl group or an aryl group, as described above for R³. Alternatively, each R⁴ may be an independently selected alkyl group. Alternatively, each R⁴ may be independently selected from the group consisting of methyl and phenyl. Alternatively, each R⁴ may be methyl.

Alternatively, (B) the polyorganohydrogensiloxane may be linear or cyclic. For example, (B) the polyorganohydrogensiloxane may be a linear polyorganohydrogensiloxane comprising unit formula (B-1): (HR⁴₂SiO_{1/2})_{g}(R⁴₃SiO_{1/2})ₕ(R⁴₂SiO_{2/2})ᵢ(HR⁴SiO_{2/2})ⱼ, where R⁴ is as described above, and subscripts g, h, i, and j have values such that g ≥ 0, h ≥ 0, a quantity (g + h) = 2, i ≥ 0, j ≥ 0, and a quantity (g + j) ≥ 1, and a quantity (i + j) is 0 to 2,000. The quantity (i + j) may be 2,000 or less, alternatively 1,000 or less, alternatively 750 or less, alternatively 500 or less, alternatively 250 or less, alternatively 100 or less, and alternatively 50 or less; while at the same time, the quantity (i + j) may be 0 or more, alternatively 1 or more, alternatively 2 or more, alternatively 3 or more, alternatively 4 or more, alternatively 5 or more, alternatively 10 or more, alternatively 15 or more, and alternatively 20 or more. Alternatively (i + j) may be 0 to 1,000; alternatively 1 to 500; alternatively 2 to 250, and alternatively 3 to 100. Alternatively (i + j) may be 1 to 100. Alternatively, (i + j) may be 2 to 50. Alternatively, (i + j) may be 5 to 25. Alternatively, when g = 0 and h = 2, j ≥ 1 (alternatively ≥ 2). Alternatively, g may be 1, and h may be 1. Alternatively, g may be 2 and h may be 0. Alternatively, i may be 0 to 5, alternatively 1 to 4, alternatively 2 to 4, and alternatively 3 to 3.5. Alternatively, i may be 5 to 25. Alternatively, j may be 1 to 10, alternatively 2 to 9, alternatively 3 to 8, alternatively 4 to 7, and alternatively 5 to 6. Alternatively, when g > 0, then j may be 0.

Suitable linear polydiorganohydrogensiloxanes for use herein are exemplified by:
(i) α,ω-dimethylhydrogensiloxy-terminated poly(dimethylsiloxane/methylhydrogensiloxane),
(ii) α,ω-dimethylhydrogensiloxy-terminated polymethylhydrogensiloxane,
(iii) α,ω-trimethylsiloxy-terminated poly(dimethylsiloxane/methylhydrogensiloxane),
(iv) α,ω-trimethylsiloxy-terminated polymethylhydrogensiloxane, and
(v) α-dimethylhydrogensiloxy-ω-trimethylsiloxy-terminated poly(dimethylsiloxane/methylhydrogensiloxane),
(vi) α-dimethylhydrogensiloxy-ω-trimethylsiloxy-terminated polymethylhydrogensiloxane,
(vii) a combination of two or more thereof.

Alternatively, the polyorganohydrogensiloxane may be cyclic. The cyclic polyorganohydrogensiloxane may comprise unit formula (B-2): (R⁴₂SiO_{2/2})ᵤ(R⁴HSiO_{2/2})ᵥ, where R⁴ is as described above, subscript u is 0 or more, subscript v is 1 or more, a quantity (u + v) is 3 to 15. Alternatively u may be 0. Alternatively, u may be 0 or more, alternatively 1 or more, alternatively 2 or more, alternatively 3 or more; while at the same time u may be up to 6, alternatively up to 5, and alternatively up to 4. Alternatively, u may be 0 to 6, alternatively 0 to 4, alternatively 0 to 2, and alternatively 1 to 6. Alternatively, v may be 1 or more, alternatively 2 or more, alternatively 3 or more, and alternatively 4 or more; while at the same time, v may be 12 or less, alternatively 10 or less, alternatively 8 or less, alternatively 6 or less, and alternatively 5 or less. Alternatively, v may have an average value of 4. Alternatively, v may be 1 to 12, alternatively 2 to 10, alternatively 3 to 8, alternatively 3 to 6, and alternatively 3 to 5. In unit formula (B-2), each R⁴ may be methyl. Examples of cyclic polyorganohydrogensiloxanes include (i) trimethylcyclotrisiloxane, (ii) tetramethylcyclotetrasiloxane, (iii) pentamethylcyclopentasiloxane, (iv) hexamethylcyclohexasiloxane, and (v) combinations of two or more thereof.

Suitable polyorganohydrogensiloxanes are known in the art and are commercially available. For example, DOWSIL^{™} 6-3570 Polymer, DOWSIL^{™} SH 1107 Fluids and XIAMETER^{™} MHX-1107 Fluids are available from The Dow Chemical Company of Midland, Michigan, USA. Polydiorganohydrogensiloxanes such as HMS-992 (trimethylsilyl terminated polymethyhydrosiloxane), HMS-HM271 (hydride-terminated methylhydrosiloxane - dimethylsiloxane copolymer), and HMS-031 (trimethylsiloxy-terminated methyhydrosiloxane dimethylsiloxane copolymer) are available from Gelest, Inc. of Morrisville, Pennsylvania, USA. Other polydiorganohydrogensiloxanes available from Gelest include HMS-H271, HMS-071, HMS-993; HMS-301 and HMS-301 R, HMS-991, HMS-993, HMS-082, HMS-151, HMS-013, HMS-053, HAM-301 (which is octyl functional), and HPM-502 (which is phenyl functional). Methods of preparing linear and branched polyorganohydrogensiloxanes suitable for use herein, such as hydrolysis and condensation of organohalosilanes, are well known in the art, as exemplified in U.S. Patent 3,957,713 to Jeram et al.; U.S. Patent 4,329,273 to Hardman, et al.; U.S. Patent 4,370,358 to Hayes, et al.; U.S. Patent 4,707,531 to Shirahata; U.S. Patent 5,310,843 to Morita; and U.S. Patent 2,823,218 to Speier, et al., which discloses organohydrogensiloxane oligomers and linear polymers as well as cyclic polymethyhydrogensiloxanes.

The exact amount of polyorganohydrogensiloxane in the composition depends on various factors including the Si-H content of the polyorganhydrogenosiloxane (which may be determined using quantitative infra-red analysis in accordance with ASTM E168) and the type and amount of (C) the hydrocarbonoxy-functional organosilicon compound. However, the amount of (B) the polyorganohydrogensiloxane in the composition may be 1 wt % or more, alternatively 5 wt% or more, alternatively 10 wt% or more, alternatively 15 wt% or more, alternatively 20 wt% or more, and alternatively 25 wt% or more, while at the same time the concentration may be < 100 wt%, alternatively 90 wt% or less, alternatively 85 wt% or less, alternatively 80 wt% or less, alternatively 75 wt% or less, and alternatively 60 wt% or less; based on combined weights of (A) the catalyst, (B) the polyorganohydrogensiloxane, and (C) the hydrocarbonoxy-functional organosilicon compound in the composition. Alternatively, the amount of (B) the polyorganohydrogensiloxane in the composition may be 1 wt% to < 100 wt%, alternatively 5 wt% to 90 wt%, alternatively 10 wt% to 85 wt%, alternatively 15 wt% to 80 wt%, alternatively 20 wt% to 75 wt%, alternatively 25 wt% to 70 wt%, and alternatively 30 wt% to 90 wt%, each based on combined weights of (A) the catalyst, (B) the polyorganohydrogensiloxane, and (C) the hydrocarbonoxy-functional organosilicon compound in the composition.

The polyorganohydrogensiloxane, (B), can be the same or can be a different molecule from (C-2) the hydrocarbonoxy-functional organosiloxane oligomer or polymer, described below. That is, if the composition comprises an organosiloxane oligomer or polymer that has both an Si-H moiety and a silicon bonded hydrocarbonoxy-functional moiety, then said polymer or oligomer can also contain a Si-H moiety and serve as both starting materials (B) and (C) in the composition. For example, when both the Si-H moiety and the hydrocarbonoxy moiety are present in the same molecule, one or more instances of R⁴ in the formulas shown above may be replaced with the hydrocarbonoxy moiety with the formula (c) shown below. Alternatively, (B) the polyorganohydrogensiloxane can be a different molecule than (C) the hydrocarbonoxy-functional organosilicon compound that is also in the composition. Starting material (C) the hydrocarbonoxy-functional organosilicon compound can be free of Si-H moieties.

### Starting Material (C) Hydrocarbonoxy-Functional Organosilicon Compound

Starting material (C) in the composition is hydrocarbonoxy-functional organosilicon compound has a formula selected from the group consisting of (C-1) a hydrocarbonoxysilane, (C-2) a hydrocarbonoxy-functional organosiloxane oligomer or polymer, and (C-3) a combination of (C-1) and (C-2).

The hydrocarbonoxysilane has formula (C-1): R⁷(_{4-b)}Si(OR⁵)_{b}, where each R⁷ is independently selected from the group consisting of a monovalent hydrocarbon group and a monovalent halogenated hydrocarbon group, each R⁵ is the monovalent hydrocarbon group of 1 to 6 carbon atoms, and subscript b is 1 to 4. The monovalent hydrocarbon group and the monovalent halogenated hydrocarbon group for R⁷ are as described and exemplified above for R³. The monovalent hydrocarbon group of 1 to 6 carbon atoms for R⁵ may be an alkyl group, e.g., methyl, ethyl, propyl (including isopropyl and n-propyl), butyl (including n-butyl, isobutyl, t-butyl, and sec-butyl), as well as pentyl, hexyl, and branched isomers having 5 to 6 carbon atoms. Alternatively, each R⁵ may be methyl or ethyl; alternatively methyl. Alternatively, subscript b may be 1 or more, alternatively 2 or more, while at the same time, subscript b may be 4 or less, alternatively 3 or less. Alternatively, subscript b may be 1 to 3, alternatively 1 to 2, alternatively 2 to 3, and alternatively 2 to 4.

Alternatively, the hydrocarbonoxysilane may have formula R⁷Si(OR⁵)₃, where R⁷ and R⁵ are as described above. Alternatively, each R⁷ may be an alkyl group of 1 to 20 carbon atoms, and each R⁵ may be an alkyl group of 1 to 4 carbon atoms.

Starting material (C-1) the hydrocarbonoxysilane may comprise an alkoxysilane exemplified by a monoalkoxysilane, such as a trialkylalkoxysilane; a dialkoxysilane, such as a dialkyldialkoxysilane; a trialkoxysilane, such as an alkyltrialkoxysilane; a tetraalkoxysilane; or a combination thereof. Examples of suitable monoalkoxysilanes include trimethylmethoxysilane, trimethylethoxysilane, triethylethoxysilane, triethylmethoxysilane, vinyldimethylethoxysilane, allyldimethylmethoxysilane, vinyldimethylmethoxysilane, dimethylphenylmethoxysilane, methyldiphenylmethoxysilane, triphenylmethoxysilane, and a combination thereof. Examples of suitable dialkoxysilanes include diisobutyldiethoxysilane, n-octadecylmethyldiethoxysilane, diphenyldiethoxysilane, diphenyldimethoxysilane, di(4-tolyl)dimethoxysilane, and combinations thereof. Examples of suitable trialkoxysilanes include methyltrimethoxysilane, methyltriethoxysilane, ethyltrimethoxysilane, ethyltriethoxysilane, isobutyltrimethoxysilane, isobutyltriethoxysilane, n-octyltrimethoxysilane, n-octyltriethoxysilane, allyltrimethoxysilane, vinyltrimethoxysilane, vinyltriethoxysilane, phenyltrimethoxysilane, p-tolyltrimethoxysilane, p-tolyltriethoxysilane, pentafluorophenyltriethoxysilane, 4-trifluoromethyltetrafluorophenyltriethoxysilane, 1-naphthyltriethoxysilane, 1-naphthyltrimethoxysilane, benzyltriethoxysilane, and a combination thereof. Examples of suitable tetraalkoxysilanes include tetraethoxysilane and tetra-n-propoxysilane. These alkoxysilanes are known in the art and can be made by known methods such as alkoxylation of the corresponding chlorosilane, and/or suitable alkoxysilanes are commercially available, e.g., from Gelest, Inc. of Morrisville, Pennsylvania, USA.

Other commercially available alkoxysilanes include, XIAMETER^{™} OFS-6070 silane, XIAMETER ^{™} OFS-6011 silane, XIAMETER ^{™} OFS-6020 silane, XIAMETER ^{™} OFS-6030 silane, DOWSIL^{™} Z-6062 silane, DOWSIL^{™} Z-6300 silane, DOWSIL^{™} Z-6341 Silane, XIAMETER ^{™} OFS-6040 silane, DOWSIL^{™} Z-6023 silane, DOWSIL^{™} Z-6015 silane, XIAMETER ^{™} OFS-6920 silane, XIAMETER ^{™} OFS-6690 silane and XIAMETER ^{™} OFS-6076 silane; all of which are commercially available from The Dow Chemical Company of Midland, Michigan, USA.

Alternatively, (C) the hydrocarbonoxy-functional organosilicon compound may comprise (C-2) the hydrocarbonoxy-functional organosiloxane oligomer or polymer, which comprises a silicon bonded hydrocarbonoxy-functional moiety of formula (c): 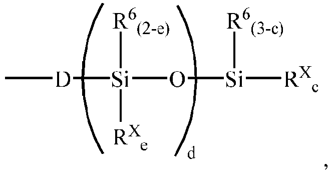 where each D independently represents an oxygen atom, a divalent hydrocarbon group, a divalent siloxane group, or a combination of a divalent hydrocarbon group and a divalent siloxane group; each R^{X} independently represents a group of the formula -OR⁵, wherein each R⁵ is as described above; each R⁶ is independently selected from the group consisting of a monovalent hydrocarbon group and a monovalent halogenated hydrocarbon group as described above for R³; subscript c represents 0, 1, 2, or 3; subscript e represents 0, 1, or 2; and subscript d has a value of 0 or greater, with the proviso that the sum of (e + c) is at least 1, such that, on average, at least one R^{X} is present in the formula. Alternatively, subscript d may have a value of 0 to 18. Alternatively, subscript c may be 1. Alternatively, subscript c may be 2 or 3. Alternatively, subscript e may be 0. Alternatively, subscript d may be 0. Alternatively, subscript d may be 2 to 5, alternatively 2 to 3.

Alternatively, each D may be independently selected from an oxygen atom and a divalent hydrocarbon group. Alternatively, each D may be an oxygen atom. Alternatively, each D may be a divalent hydrocarbon group exemplified by an alkylene group such as ethylene, propylene, butylene, or hexylene; an arylene group such as phenylene, or an alkylarylene group such as: 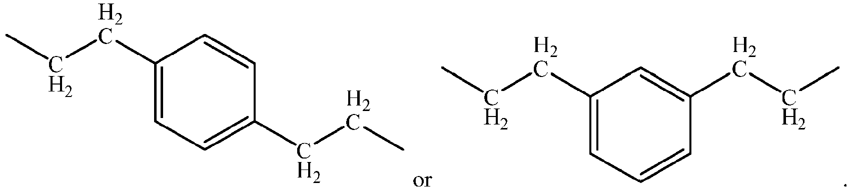 Alternatively, an instance of D may be an oxygen atom while a different instance of D is a divalent hydrocarbon group.

Alternatively, each R^{X} may be independently selected from the group consisting of an alkoxy group and an alkenyloxy group. Alternatively, each R^{X} may be an alkoxy group, such as methoxy or ethoxy.

Alternatively, each R⁶ in the formula above may be independently selected from alkyl groups of 1 to 20 carbon atoms, aryl groups of 6 to 20 carbon atoms, and aralkyl groups of 7 to 20 carbon atoms.

The organosiloxane oligomer or polymer may comprise the hydrocarbonoxy-functional moiety of the formula shown above in an amount of said oligomer or polymer of 0.2 mol% or more, alternatively 0.5 mol % or more, alternatively 0.6 mol% or more, while at the same time the amount may be 10 mol% or less, alternatively 5 mol% or less, alternatively 2 mol% or less, alternatively 1.5 mol% or less, and alternatively 1.2 mol% or less. Alternatively, the amount of hydrocarbonoxy-functional moiety of the formula shown above may be 0.2 mol % to 10 mol %, alternatively 0.5 mol % to 5 mol %, alternatively 0.5 mol % to 2.0 mol %, alternatively 0.5 mol % to 1.5 mol %, and alternatively 0.6 mol % to 1.2 mol %.

Starting material (C-2) may have a polyorganosiloxane backbone with a linear structure, *i.e.,* a polydiorganosiloxane backbone. When starting material (C-2), the hydrocarbonoxy-functional organosiloxane oligomer or polymer, has a polydiorganosiloxane backbone, starting material (C-2) may comprise an alkoxy-endblocked polydiorganosiloxane, an alkoxysilylhydrocarbylene-endblocked polydiorganosiloxane, or a combination thereof.

Alternatively, starting material (C-2) may comprise a polydiorganosiloxane of formula (C-3): 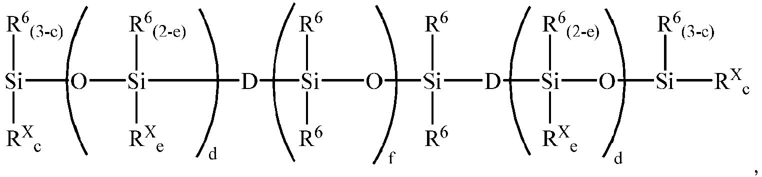 where R⁶, R^{X}, and subscripts c, d, and e are as described above, and subscript f has a value of 1 or more. Alternatively, subscript f may have a value sufficient to provide the polydiorganosiloxane of formula (C-3) with a viscosity of at least 100 mPa·s at 25 °C and/or a DP of at least 87. DP may be measured by GPC using polystyrene standards calibration. Alternatively, subscript f may have a value of at least 1, alternatively at least 2, alternatively at least 5, alternatively at least 10, alternatively at least 50; while at the same time f may have a value up to 200,000, alternatively up to 100,000, alternatively up to 50,000, alternatively up to 2,000, alternatively up to 1,000, alternatively up to 500, and alternatively up to 100. Alternatively, subscript f may have a value ranging from 1 to 200,000. Alternatively, in formula (C-3) above, each R⁶ may be selected from the group consisting of alkyl, alkenyl, and aryl. Alternatively, the alkyl groups for R⁶ may be selected from the group consisting of methyl, ethyl, and propyl. Alternatively, alkenyl groups for R⁶ may be selected from the group consisting of vinyl, allyl, and hexenyl. Alternatively, the aryl groups for R⁶ may be phenyl. Alternatively, in the unit formula above, each R^{X} may be methoxy or ethoxy. Organosiloxane oligomers and polymers of formula (C-3) may be prepared, for example, as described in U.S. Patent Application Publication 2020-0140618 or PCT Publications WO2019/005711 or WO2019/005713.

Alternatively, the organosiloxane oligomer or polymer may comprise unit formula (C-4):
(R^{X}R⁶₂SiO_{1/2})*ₒ*(R⁶₃SiO_{1/2})*ₚ*(R⁶₂SiO_{2/2})*_{q}*(R^{X}R⁶SiO_{2/2})*ᵣ*(R^{X}SiO_{3/2})*ₛ*(R⁶SiO_{3/2})*ₜ*(SiO_{4/2})*ᵤ*, where R^{X} represents the group of the formula -OR⁵, where R⁵ is as described above, subscripts *o, p, q,* and *r* have values such that *o* ≥ 0*, p* ≥ 0*,* q ≥ 0, *r* ≥ 0, *s* ≥ 0, *t* ≥ 0*, u* ≥ 0, a quantity (*o* + *r +* s) has an average value of 1 or more, alternatively 1 to 6, alternatively 1 to 3, and alternatively 1 to 2; and each R⁶ is independently selected from the group consisting of a monovalent hydrocarbon group and a monovalent halogenated hydrocarbon group as described above for R³. Alternatively, a quantity (*o + p + q + r + s + t + u)* may be at least 3, alternatively 3 to 2,000. Alternatively, a quantity *(q + r)* may be 1 to 2,000; alternatively 1 to 50. Alternatively, a quantity (*o + p)* may be 0 to 50, alternatively 0 to 2. Alternatively, 1 ≥ s ≥ 0. Alternatively, 1 ≥ *t* ≥ 0. Alternatively, the quantity *(o + r +* s) has an average value of 1 to 6, alternatively 1 to 3, and alternatively 1 to 2. Alternatively, in unit formula (C-4) above, each R⁶ may be selected from the group consisting of alkyl, alkenyl, and aryl. Alternatively, the alkyl groups for R⁶ may be selected from the group consisting of methyl, ethyl, and propyl. Alternatively, alkenyl groups for R⁶ may be selected from the group consisting of vinyl, allyl, and hexenyl. Alternatively, the aryl groups for R⁶ may be phenyl. Alternatively, in the unit formula above, each R^{X} may be methoxy or ethoxy.

Alternatively, (e.g., when o has an average value of 2, and *p* = *r = s = t = u =* 0), starting material (C-2) may comprise a polydiorganosiloxane of formula (C-5): R⁶₂R^{X}SiO-(R⁶₂SiO)*_{b}*-OSiR^{X}R^{G}₂, where each R⁶ and each R^{X} is are as described above, and subscript *b* ≥ 1. Alternatively, subscript *b* may be 1 to 2,000, alternatively 5 to 900, alternatively 5 to 50, and alternatively subscript b may be 1 to 50. Alternatively, in formula (C-5), each R⁶ may be independently selected from the group consisting of alkyl (e.g., methyl, ethyl, and propyl), alkenyl (e.g., vinyl, allyl, and hexenyl), and aryl (e.g., phenyl). Alternatively, in formula (C-5), each R^{X} may be methoxy or ethoxy. Polydiorganosiloxanes of formula (C-5), such as methoxy-terminated polydimethylsiloxane with viscosity of 5 to 12 cSt are commercially available from Gelest, Inc. and 1,3-diethoxy-1,1,3,3-tetramethyldisiloxane is commercially available from Millipore Sigma of St. Louis, Missouri, USA.

Alternatively, starting material (C-2) may comprise unit formula (C-6): :
(R⁶SiO_{3/2})*ₘ*(R⁶R^{X}SiO_{2/2})*ₙ*(R⁶₂R^{X}SiO_{1/2})*_{z}*, where R⁶ and R^{X} are as described above, and subscript *m* is > 0 to 100, subscript *n* is 0 to 100, subscript *z* is 0 to 20. Alternatively, subscript *m* may be > 0 to 20, alternatively 1 to 20. Alternatively, subscript n may be 1 to 20. Alternatively, subscript *z* may be 0. Alternatively, subscript *z* may be > 0 to 20. Alternatively, in unit formula (C-6), each R⁶ may be independently selected from the group consisting of alkyl (e.g., methyl, ethyl, and propyl), alkenyl (e.g., vinyl, allyl, and hexenyl), aryl (e.g., phenyl), and haloalkyl (e.g., chloromethyl, chloropropyl, and trifluoropropyl). Alternatively, in unit formula (C-6), each R^{X} may be methoxy or ethoxy. One skilled in the art would recognize that alkoxy-functional siloxane resins may further comprise hydroxyl groups. Examples of suitable alkoxy-functional siloxane resins of unit formula (C-6) include DOWSIL^{™} 3037, DOWSIL^{™} 3074, DOWSIL^{™} 1686, DOWSIL^{™} CF0189, DOWSIL^{™} Z-6289, DOWSIL^{™} US-CF2403 Resin and DOWSIL^{™} 2405 Resin from Dow Silicones Corporation of Midland, Michigan, USA.

Suitable resins for starting material (C-2) and methods for their preparation are known in the art. For example, the alkoxy-functional organopolysiloxane resin, or the resin - polymer blend, prepared as described in U.S. Patent 9,670,392; U.S. Patent 10,125,225; or PCT Publication WO2014/124389 may be used as starting material (C-2) herein.

Starting material (C) may comprise one or more of the hydrocarbonoxy-functional organosilicon compounds described herein. The exact amount of (C) the hydrocarbonoxy-functional organosilicon compound in the composition depends on various factors including the Si-H content of the polyorganosiloxane and the type and amount of (C) the hydrocarbonoxy-functional organosilicon compound selected. However, the amount of (C) the hydrocarbonoxy-functional organosilicon compound in the composition may be 1 wt% or more, alternatively 2 wt% or more, alternatively 3 wt% or more, alternatively 4 wt% or more, and alternatively 5 wt% or more while at the same time the concentration may be 90 wt% or less, alternatively 70 wt% or less, alternatively 50 wt% or less, alternatively 30 wt% or less, and alternatively 15 wt% or less based on combined weights of (A) the catalyst, (B) the polyorganohydrogensiloxane, and (C) the hydrocarbonoxy-functional organosilicon compound in the composition. Alternatively, the amount of (C) the hydrocarbonoxy-functional organosilicon compound in the composition (when starting materials (B) and (C) are different components) may be 1 wt% to 90 wt%, alternatively 2 wt% to 70 wt%, alternatively 3 wt% to 50 wt%, alternatively 4 wt% to 30 wt%, alternatively 5 wt% to 15 wt%, and alternatively 6 wt% to 14 wt%, each based on combined weights of (A) the catalyst, (B) the polyorganohydrogensiloxane, and (C) the hydrocarbonoxy-functional organosilicon compound in the composition.

### Starting Material (D) Solvent

Starting material (D) is an optional solvent, which may be used to facilitate combination of starting materials (A), (B), and/or (C) in the composition and method described herein. Solvents used herein are those that help fluidize the starting materials, but essentially do not react with any of these starting materials. Solvent may be selected based on solubility of the starting materials and volatility of the solvent. The solubility refers to the solvent being sufficient to dissolve and/or disperse the starting materials. Volatility refers to vapor pressure of the solvent. For example, starting material (A), the phosphonium catalyst, may be dissolved in a solvent before combining starting material (A) with starting materials (B) and (C). Alternatively, starting material (B) may be dissolved in a solvent before combining with starting materials (A) and (C) when starting material (B) is a viscous fluid, such as a gum, or a solid at RT, such as a resin. Alternatively, starting material (C) may be dissolved in a solvent before combining with starting materials (A) and (B), e.g., when starting material (C) is a solid at RT, such as a resin or a gum. The solvent may be used in any amount, which will be selected by one of skill in the art, depending on various factors, such as the selection of starting materials (A), (B), and (C) their solubilities.

Suitable solvents may be hydrocarbons. Suitable hydrocarbons include aromatic hydrocarbons such as benzene, toluene, or xylene; and/or aliphatic hydrocarbons such as heptane, hexane, or octane. Alternatively, the solvent may be a halogenated hydrocarbon such as chloroform, 1,1,1-trichloroethane or methylene chloride. One solvent, or a combination comprising two or more solvents, may be used herein.

The amount of solvent can depend on various factors including the type of solvent selected and the amounts and types of other starting materials selected. However, the amount of solvent may be 0.1 wt% or more, alternatively 2 wt% or more, while at the same time the amount of solvent may be up to 99 wt%, alternatively up to 50 wt%, based on combined weights of starting materials (A), (B), and (C). Alternatively, the amount of (D) the solvent may be 0.1 wt% to 99 wt%, alternatively 2 wt% to 50 wt%, based on combined weights of (A) the catalyst, (B) the polyorganohydrogensiloxane, and (C) the hydrocarbonoxy-functional organosilicon compound in the composition.

The composition can consist of the phosphonium catalyst, the polyorganohydrogensiloxane, and the hydrocarbonoxy-functional organosilicon compound (and when present, the solvent). Alternatively, the composition described herein may optionally further comprise an additional component. Optional additional components may be present at a concentration of 50 wt% or less, 40 wt% or less, 30 wt% or less, 20 wt% or less, 10 wt% or less, 5 wt% or less, or even one wt% or less based on composition weight.

### Optional Additional Components

Examples of possible optional components include one, or a combination of more than one, component selected from a group consisting of pigments such as carbon black or titanium dioxide, fillers such as metal oxides including SiO₂ (e.g., at a concentration of 50 wt% or less based on composition weight), moisture scavengers, fluorescent brighteners, stabilizers (such as antioxidants and ultraviolet stabilizers), and corrosion inhibitors.

Alternatively, in addition to, or instead of, the optional components described above, the composition may optionally further comprise a polyorganosiloxane that is free of Si-H moieties and free of hydrocarbonoxy moieties. This polyorganosiloxane comprises two or more siloxane units selected from R⁴₃SiO_{1/2}, R⁴₂SiO_{2/2}, R⁴SiO_{3/2}, and SiO_{4/2} units; wherein each R⁴ is an independently selected monovalent hydrocarbon group, which is free of aliphatic unsaturation, as described above. Alternatively, the polyorganosiloxane may be a polydiorganosiloxane, which may be linear or cyclic. For example, the polydiorganosiloxane may be a linear polydiorganosiloxane comprising unit formula (1): (R⁴₃SiO_{1/2})₂(R⁴₂SiO_{2/2})ₓ, where R⁴ is as described above, and 1,000 ≥ x ≥ 1. Alternatively, subscript x may be at least 1, alternatively at least 2, alternatively at least 3, alternatively at least 5, alternatively at least 10, alternatively at least 25; while at the same time subscript x may be up to 1,000, alternatively up to 500, alternatively up to 250, alternatively up to 100, and alternatively up to 50. Alternatively, subscript x may have a value such that 500 ≥ x ≥ 1, alternatively 250 ≥ x ≥ 2, alternatively 100 ≥ x ≥ 5, alternatively 50 ≥ x ≥ 10, and alternatively 50 ≥ x ≥ 25.

Suitable linear polydiorganosiloxanes for use herein are exemplified by:
(i) α,ω-trimethylsiloxy-terminated polydimethylsiloxane,
(ii) α,ω-dimethylphenylsiloxy-terminated poly(dimethylsiloxane/methylphenylsiloxane),
(iii) α,ω-dimethylphenylsiloxy-terminated polymethylphenylsiloxane,
(iv) α,ω-trimethylsiloxy-terminated poly(dimethylsiloxane/methylphenylsiloxane),
(v) α,ω-trimethylsiloxy-terminated polymethylphenylsiloxane, and
(vi) a combination of two or more thereof.

Polydiorganosiloxanes are known in the art and are commercially available. For example, DOWSIL^{™} 200 Fluids, DOWSIL^{™} OS Fluids, and XIAMETER^{™} PMX-200 Silicone Fluids are commercially available from The Dow Chemical Company of Midland, Michigan, USA.

Alternatively, the polyorganosiloxane may be a cyclic polydiorganosiloxane comprising unit formula (2): (R⁴₂SiO_{2/2})_{y}, where R⁴ is as described above, and 15 ≥ y ≥ 3. Alternatively, subscript y may be at least 3, alternatively at least 4, alternatively at least 5, and alternatively at least 6; while at the same time, subscript y may be up to 15, alternatively up to 12, alternatively up to 10, alternatively up to 8, and alternatively up to 6. Alternatively, subscript y may have a value such that 12 ≥ y ≥ 3, alternatively 10 ≥ y ≥ 3, alternatively 8 ≥ y ≥ 3, alternatively 6 ≥ y ≥ 3, and alternatively 6 ≥ y ≥ 4.

Examples of cyclic polydiorganosiloxanes include hexamethylcyclotrisiloxane, octamethylcyclotetrasiloxane, decamethylcyclopentasiloxane, dodecamethylcyclohexasiloxane, and a combination of two or more thereof. These cyclic polydiorganosiloxanes are commercially available, e.g., from Sigma-Aldrich, Inc. of St. Louis, Missouri, USA.

The composition alternatively can be free of any one, or any combination of more than one, such additional components. In addition, the composition can contain one wt% or less, alternatively 0.5 wt% or less water relative to composition weight. Alternatively, the composition may be free of water.

The composition described herein may be free of transition metals. "Free of transition metals" means that the composition contains none, or a non-detectable amount, or an amount insufficient to gel the composition at room temperature after 24 hours, of a metal in Groups 3-12 of the IUPAC Periodic Table of the Elements dated 1 December 2018. Without wishing to be bound by theory, it is thought that transition metals may catalyze reaction of starting materials (B) and (C) at an undesirably low temperature (e.g., < 65 °C).

The composition described herein may be free of Lewis base. "Free of Lewis base" means that the composition contains none or an insufficient amount of a compound or ionic species, that can donate an electron pair to (A) the phosphonium catalyst, to prevent the composition from sufficiently curing to form a gel within 20 minutes when heated at 65 °C. For example, the composition may be free of a Lewis base selected from a group consisting of the following bases: PR¹⁰₃, P(NR¹⁰₂)₃, NR¹⁰₃, N(SiR¹⁰₃)ₓR¹⁰₃₋ₓ, R¹⁰C(NR¹⁰)N, P(N-R¹⁰)R¹⁰₃ , guanidines (C(=NR¹⁰)(NR¹⁰₂)₂), amidines (R¹⁰C(=NR¹⁰)NR¹⁰₂), phosphazenes, and 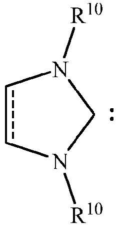 ; where R¹⁰ is in each occurrence independently selected from a group consisting of hydrogen, alkyl, substituted alkyl, aryl and substituted aryl.

### Method

The composition described above may be a one part composition. The one part composition contains all of starting materials (A), (B) and (C) in the same part. The composition may be prepared in a method, which comprises step: i) combining starting materials comprising (A) the phosphonium catalyst, (B) the polyorganohydrogensiloxane, and (C) the hydrocarbonoxy-functional organosilicon compound, and when present (D) the solvent and/or the optional additional component, described above, thereby forming a mixture. Starting material (D) the solvent may be used to facilitate combining starting materials (A), (B), and (C). For example, one or more of starting materials (A), (B), and (C) may be dissolved in the solvent before being mixed with the other starting materials. Alternatively, the starting materials in may consist essentially of starting materials (A), (B), and (C) (and optionally (D)), described above. Alternatively, the starting materials may consist of starting materials (A), (B), and (C) (and optionally (D)), described above.

Combining the starting materials to form the mixture and prepare the polyorganosiloxane composition is performed under conditions that will not cure (e.g., not significantly react the groups of formula OR⁵, where R⁵ is as described above) from starting material (C) and the silicon-bonded hydrogen atoms of starting material (B). These conditions may comprise mixing, e.g., by any convenient means. Mixing may be performed using conventional mixing equipment, such as an agitated batch kettle. Alternatively, when the hydrocarbonoxy-functional organosilicon compound selected for starting material (C) and/or the polyorganohydrogensiloxane selected for starting material (B) is viscous or solid (e.g., gum or resin), mixing under shear may be performed, e.g., with an extruder. The composition may be formed, e.g., by mixing starting materials comprising (A), (B), and (C) described above. Starting materials (A), (B), and (C) may be combined at RT or less. Alternatively, the temperature for combining starting materials (A), (B), and (C) (and (D), when present) may be 5 °C to 30 °C. Starting materials (A), (B), and (C) (and (D), when present) may be combined concurrently. Alternatively, starting materials (A) and (B) (and (D), when present) may be combined to form a mixture, and thereafter the mixture may be combined with starting material (C) (and additional (D), when present), e.g., by adding starting material (C) (or a solvent solution thereof) to said mixture, e.g., by metering over a period of time or by adding in one or more aliquots.

### Curing the Composition

A method for curing the composition comprises:
1) providing the composition, as described above, and
2) heating the composition to a temperature sufficient to catalyze reaction of silicon bonded hydrogen atoms in (B) the polyorganohydrogensiloxane and silicon bonded hydrocarbonoxy groups in (C) the hydrocarbonoxy-functional organosilicon compound. The resulting product prepared in step 2) comprises a reaction product of starting materials (B) and (C) (which has a siloxane bond) and a side product comprising HR⁵, where R⁵ is as described above. For example, the temperature for heating in step 2) may be ≥ 65 °C. Alternatively, the temperature may be > 30 °C, but the time for reaction may be longer at lower temperatures than at higher temperatures.

The method for curing the composition may optionally further comprise one or more additional steps. For example, the reaction in step 2) generates the side product of formula HR⁵ as described above. The method may further comprise during and/or after step 2), removing the side product of formula HR⁵. By-product HR⁵ may be removed by any convenient means, such as stripping and/or placing the reaction product under reduced pressure/vacuum. For example, the method may further comprise an additional step after step 1) and before step 2), wherein the additional step comprises placing the composition in a mold or applying the composition on a substrate.

### EXAMPLES

These examples are provided to illustrate the invention to one skilled in the art and are not to be construed as limiting the scope of the invention set forth in the claims. Starting materials used in these examples are shown in Table 1.

**Table 1 - Starting Materials**

| Starting Material | Name | Chemical Description, Chemical formula, or Structure | Source |
|---|---|---|---|
| Reagent 1 | M^{H}D_{16.55}M^{H} | 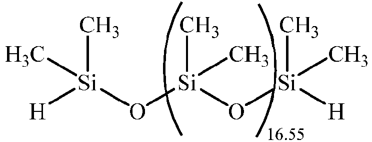 | The Dow Chemical Company |
| Reagent 2 | *n*-octylSi(OMe)₃ | 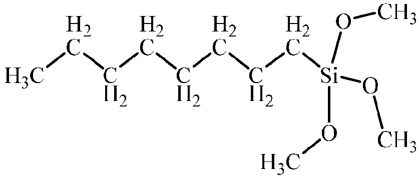 | Sigma-Aldrich |
| Catalyst 1 | [(C₆F₅)₃PF]⁺ | 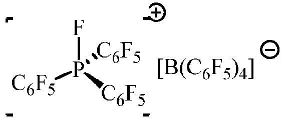 | Prepared at The Dow Chemical Company according to Science 2013, 341, 1374-1377. |
| | [B(C₆F₅)₄]⁻ | | |
| Catalyst 2 | [P(C₆F₅)₃F]⁺F⁻ | 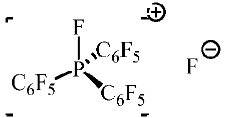 | Prepared at The Dow Chemical Company according to Science 2013, 341, 1374-1377 |
| FAB (comparative catalyst) | (C₆F₅)₃B | tris(pentafluorophenyl)borane | Sigma-Aldrich |
| Solvent | Dichloromethane | CH₂Cl₂ | Sigma-Aldrich |
| Et₃N | Triethylamine | N(CH₂CH₃)₃ | Sigma-Aldrich |

### Reference Example 1 - General Conditions

The reactions were carried out in an N₂-filled glovebox using solvents that were dried over 4 Å molecular sieves. Except as specified in Table 1, all starting materials were obtained from commercial sources and used as received.

Catalyst Stock Solutions were prepared as follows: [(C₆F₅)₃PF][B(C₆F₅)₄] (3.6 mg) was dissolved in CH₂Cl₂ (0.514 mL) to afford [(C₆F₅)₃PF][B(C₆F₅)₄] stock solution A (7 mg / mL). 0.1 mL of [(C₆F₅)₃PF][B(C₆F₅)₄] stock solution A was added to a separate vial followed by CH₂Cl₂ (1.0 mL) to afford [(C₆F₅)₃PF][B(C₆F₅)₄] stock solution B (0.7 mg / mL).

[P(C₆F₅)₃F][F] (6.6 mg) was dissolved in CH₂Cl₂ (0.94 mL) to afford [P(C₆F₅)₃F⁺][F] stock solution A' (7 mg / mL). 0.1 mL of [P(C₆F₅)₃F][F] stock solution A' was added to a separate vial followed by CH₂Cl₂ (1.0 mL) to afford [P(C₆F₅)₃F][F]stock solution B' (0.7 mg / mL).

[(C₆F₅)₃PF][B(C₆F₅)₄] + NEt₃ stock solution A: Et₃N was added in a 1:1 molar ratio with Catalyst 1. The Et₃N stock solution (79.3 uL Et3N in 1 mL CH₂Cl₂) was added first to the reaction mixture, followed by the catalyst stock solution B (0.7 mg/mL).

FAB (2.9 mg) was dissolved in CH₂Cl₂ (0.414 mL) to afford a FAB stock solution A" (7 mg / mL). 0.1 mL of FAB stock solution A" was added to a separate vial followed by CH₂Cl₂ (1.0 mL) to afford FAB stock solution B" (0.7 mg / mL).

### Reference Example 2 - Working Examples Reaction Setup & Progress using Catalyst 1 at r.t.

A 30 mL vial was charged with a magnetic stir bar, M^{H}D_{16.55}M^{H} (0.5 mL, 0.47 g, 0.34 mmol), *n*-octylSi(OMe)₃ (58.8 µL, 0.054 g, 0.23 mmol) and then 67.2 µL of [(C₆F₅)₃PF][B(C₆F₅)₄] stock solution B (0.047 mg, 100 ppm based on M^{H}D_{16.55}M^{H}). The reaction mixture was stirred at r.t.. The reaction mixture either became gel or no change was observed. Gel formation is indicative of curing (crosslinking) whereas no change in viscosity is indicative of no reaction. The results are shown below in Table 2.

### Reference Example 3 - Comparative Examples Reaction Setup & Progress

Reference Example 2 was repeated, except 67.2 µL of FAB stock solution B (0.047 mg of FAB, 100 ppm based on M^{H}D_{16.55}M^{H}) was used. The results are shown below in Table 2.

### Reference Example 4

Reference Example 2 was repeated, except 67.2 µL of [P(C₆F₅)₃F][F] stock solution B (0.047 mg of [P(C₆F₅)₃F][F], 100 ppm based on M^{H}D_{16.55}M^{H}) was used. The results are shown below in Table 2.

### Reference Example 5

Reference Example 2 was repeated, except 67.2 µL of [P(C₆F₅)₃F] stock solution B (0.047 mg of [P(C₆F₅)₃F], 100 ppm based on M^{H}D_{16.55}M^{H}) + 67.2 uL of NEt₃ stock solution B (1:1 molar ratio with Catalyst 1) was used. The results are shown below in Table 2.

### Reference Example 6 - Working Examples Reaction Setup & Progress using Catalyst 1 at 65 °C

A 30 mL vial was charged with a magnetic stir bar, M^{H}D_{16.55}M^{H} (0.5 mL, 0.47 g, 0.34 mmol), *n*-octylSi(OMe)₃ (58.8 µL, 0.054 g, 0.23 mmol) and then 67.2 µL of [(C₆F₅)₃PF][B(C₆F₅)₄] stock solution B (0.047 mg, 100 ppm based on M^{H}D_{16.55}M^{H}). The reaction mixture was stirred at 65 °C via a pre-heated aluminum block. The reaction mixture either became gel or no change was observed. Gel formation is indicative of curing (crosslinking) whereas no change in viscosity is indicative of no reaction. The results are shown below in Table 2.

### Reference Example 7 Comparative Example Reaction Setup & Progress

Reference Example 6 was repeated, except 67.2 uL of [(C₆F₅)₃PF][B(C₆F₅)₄] (0.047 mg of [(C₆F₅)₃PF][B(C₆F₅)₄]) + 67.2 uL of NEt₃ stock solution B (1:1 molar ratio with Catalyst 1) was used. The results are shown below in Table 2.

### Reference Example 8

Reference Example 6 was repeated, except 67.2 uL of [(C₆F₅)₃PF][F] stock solution A (0.047 mg of [(C₆F₅)₃PF][F]) was used. The results are shown below in Table 2.

**Table 2 - Curing of n-octylSi(OCH₃)₃ and M^{H}D_{16.55}M^{H} using FAB (comparative), Catalyst 1 (inventive), and Catalyst 2 (comparative).**

| Example | Catalyst Stock solution conc. | Amount of Stock solution added | Mass n-octylSi (OCH₃)₃ | Mass of M^{H}D_{16.55}M^{H} | Catalyst loading vs. M^{H}D_{16.55} M^{H} (ppm) | Observation |
|---|---|---|---|---|---|---|
| Ref. Ex. 3 (Comparative) FAB catalyst | 0.7 mg/mL (CH₂Cl₂) | 67.2 µL (0.047 mg of FAB) | 0.054 g | 0.47 g | 100 | Gel at r.t. immediately after addition |
| Ref. Ex. 2 (Inventive) Catalyst 1 | 0.7 mg/mL (CH₂Cl₂) | 67.2 µL (0.047 mg of 1) | 0.054 g | 0.47 g | 100 | No gel after 7 d at r.t. |
| Ref. Ex. 6 (Inventive) Catalyst 1 | 0.7 mg/mL (CH₂Cl₂) | 67.2 µL (0.047 mg of 1) | 0.054 g | 0.47 g | 100 | Gel at 65 °C after 15 min |
| Ref. Ex. 5 (Comparative) Catalyst 1 + Et₃N | 0.7 mg/mL (CH₂Cl₂) | 67.2 µL (0.047 mg of 1) | 0.054 g | 0.47 g | 100 | No gel 7d r.t. |
| Ref. Ex. 7 (Comparative) Catalyst 1 + Et₃N | 0.7 mg/mL (CH₂Cl₂) | 67.2 µL (0.047 mg of 1) | 0.054 g | 0.47 g | 100 | No gel 65°C 15 min |
| Ref. Ex. 4 (Comparative) Catalyst 2 | 0.7 mg/mL (CH₂Cl₂) | 67.2 µL (0.047 mg of 2) | 0.054 g | 0.47 g | 100 | No gel 7d r.t. |
| Ref. Ex. 8 (Comparative) | 0.7 mg/mL (CH₂Cl₂) | 67.2 µL (0.047 mg of 2) | 0.054 g | 0.47 g | 100 | No gel 65°C 15min |

The data in Table 2 for Reference Examples 2 and 6 show that the phosphonium catalyst comprising a tetravalent monocation of phosphorus and a non-coordinating anion can be used to prepare a one part composition that is stable (not gelling) for 7 days at r.t., but that cures in 15 minutes at elevated temperature of 65 °C. Reference Examples 5 and 7 showed that the presence of a Lewis base (triethyl amine) prevented curing under the conditions tested. Reference Example 8 (last line of Table 2) shows that catalyst 2, which included a strongly coordinating anion, did not cure the composition when tested at 65 °C. Reference Example 3 shows the rapid cure at room temperature when FAB is used instead of the catalyst described herein.

### Industrial Applicability

The composition described above is shelf stable, which means that the composition does not gel at RT in 5 hours or less, alternatively 24 hours or less, alternatively 48 hours or less, and alternatively one week or less. The composition and method described herein are useful for preparing and curing polyorganosiloxane compositions that cure to form products such as coatings, adhesives, elastomers, and foams. The inventors surprisingly found that the catalyst described herein will cure the polyorganosiloxane composition. Furthermore, the inventors surprisingly found that there is no need for a Lewis base and/or a bridging molecule to stabilize the catalyst described herein. In contrast, the presence of a Lewis base such as triethylamine, can render the present composition incurable under the conditions tested in the examples above. The composition and method of this invention provide a polyorganosiloxane composition that is shelf stable at RT and that is curable with heating to mild temperatures.

### Definitions and Usage of Terms

Abbreviations used in the specification have the definitions in Table 3, below.

**Table 3 - Abbreviations**

| Abbreviation | Definition |
|---|---|
| ASTM | ASTM International |
| °C | degrees Celsius |
| d | days |
| g | grams |
| GPC | gel permeation chromatography |
| h | hours |
| Me | Methyl |
| mg | milligrams |
| min | minutes |
| mL | milliliters |
| mmol | millimoles |
| Ph | phenyl |
| ppm | parts per million |
| RT or r.t. | room temperature of 23 °C ± 2 °C |
| s | seconds |
| uL or µL | microliters |
| wt | weight |

All amounts, ratios, and percentages are by weight unless otherwise indicated. The amounts of all starting materials in a composition total 100% by weight. The articles 'a', 'an', and 'the' each refer to one or more, unless otherwise indicated by the context of specification. The singular includes the plural unless otherwise indicated.

The term "comprising" and derivatives thereof, such as "comprise" and "comprises" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

Generally, as used herein a hyphen "-" or dash "-" in a range of values is "to" or "through"; a ">" is "above" or "greater-than"; a "≥" is "at least" or "greater-than or equal to"; a "<" is "below" or "less-than"; and a "≤" is "at most" or "less-than or equal to."

### Embodiments of the Invention

In a first embodiment, a composition is as claimed and comprises a mixture of:
1 ppm to 1,000 ppm by weight, based on combined weights of starting materials (A), (B), and (C) of (A) a phosphonium catalyst comprising
   (i) a tetravalent monocation of phosphorus of formula [PR¹₃R²]⁺, where each R¹ is an independently selected halogenated aryl group of formula 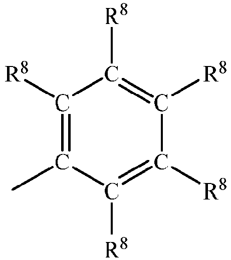 where each R⁸ is selected from Cl, F, or -CF₃, and each R² is independently selected from Br, Cl, F, and -CF₃, and
   (ii) a non-coordinating anion of formula [BR³₄]⁻, where each R³ is independently selected from the group consisting of a monovalent hydrocarbon group and a monovalent halogenated hydrocarbon group;
1 weight % to < 100 weight % based on combined weights of starting materials (A), (B), and (C), of (B) a polydiorganohydrogensiloxane selected from the group consisting of
   a linear polydiorganohydrogensiloxane comprising unit formula (B-1): (HR⁴₂SiO_{1/2})_{g}(R⁴₃SiO_{1/2})ₕ(R⁴₂SiO_{2/2})ᵢ(HR⁴SiO_{2/2})ⱼ, where each R⁴ is an independently selected monovalent hydrocarbon group, which is free of aliphatic unsaturation, and subscripts g, h, i, and j have values such that g ≥ 0, h ≥ 0, a quantity (g + h) = 2, i ≥ 0, j ≥ 0, and a quantity (g + j) ≥ 1, and a quantity (i + j) is 0 to 2,000;
   a cyclic polydiorganohydrogensiloxane comprising unit formula (B-2): (R⁴₂SiO_{2/2})ᵤ(R⁴HSiO_{2/2})ᵥ, where R⁴ is as described above, subscript u is 0 or more, subscript v is 1 or more, a quantity (u + v) is 3 to 15; and
   (B-3) a combination of both (B-1) and (B-2); and
1 weight % to 90 weight %, based on combined weights of starting materials (A), (B), and (C), of (C) a hydrocarbonoxysilane of formula (C-1): R⁷_{(4-b)}Si(OR⁵)_{b}, where each R⁷ is independently selected from the group consisting of a monovalent hydrocarbon group and a monovalent halogenated hydrocarbon group, each R⁵ is the monovalent hydrocarbon group of 1 to 6 carbon atoms, and subscript b is 1 to 4; wherein the composition is free of Lewis base.

In a second embodiment, in the composition of the first embodiment, (A) the phosphonium catalyst has formula [(C₆F₅)₃PF]⁺ [B(C₆F₅)₄]⁻.

In a third embodiment, in the method of the first embodiment or the second embodiment, (B) the polyorganohydrogensiloxane is selected from the group consisting of:
(i) α,ω-dimethylhydrogensiloxy-terminated poly(dimethylsiloxane/methylhydrogensiloxane),
(ii) α,ω-dimethylhydrogensiloxy-terminated polymethylhydrogensiloxane,
(iii) α,ω-trimethylsiloxy-terminated poly(dimethylsiloxane/methylhydrogensiloxane),
(iv) α,ω-trimethylsiloxy-terminated polymethylhydrogensiloxane, and
(v) α-dimethylhydrogensiloxy-ω-trimethylsiloxy-terminated poly(dimethylsiloxane/methylhydrogensiloxane),
(vi) α-dimethylhydrogensiloxy-ω-trimethylsiloxy-terminated polymethylhydrogensiloxane,
(vii) a combination of two or more thereof.

In a fourth embodiment, in the composition of any one of the first to third embodiments, (C) the hydrocarbonoxysilane is selected from the group consisting of: trimethylmethoxysilane, trimethylethoxysilane, triethylethoxysilane, triethylmethoxysilane, vinyldimethylethoxysilane, allyldimethylmethoxysilane, vinyldimethylmethoxysilane, dimethylphenylmethoxysilane, methyldiphenylmethoxysilane, triphenylmethoxysilane, diisobutyldiethoxysilane, n-octadecylmethyldiethoxysilane, diphenyldiethoxysilane, diphenyldimethoxysilane, di(4-tolyl)dimethoxysilane, methyltrimethoxysilane, methyltriethoxysilane, ethyltrimethoxysilane, ethyltriethoxysilane, isobutyltrimethoxysilane, isobutyltriethoxysilane, n-octyltrimethoxysilane, n-octyltriethoxysilane, allyltrimethoxysilane, vinyltrimethoxysilane, vinyltriethoxysilane, phenyltrimethoxysilane, p-tolyltrimethoxysilane, p-tolyltriethoxysilane, pentafluorophenyltriethoxysilane, 4-trifluoromethyltetrafluorophenyltriethoxysilane, 1-naphthyltriethoxysilane, 1-naphthyltrimethoxysilane, benzyltriethoxysilane, tetraethoxysilane and tetra-n-propoxysilane, and a combination of two or more thereof.

In a fifth embodiment, in the composition of any one of the first to fourth embodiments, the composition further comprises 1 weight % to 99 weight %, based on total weight of the composition, of (D) a solvent.

In a sixth embodiment, the composition of any one of the first to fifth embodiments is used for preparing a product selected from the group consisting of a coating, an adhesive, an elastomer, and a foam.

In a seventh embodiment, where the composition of any one of the first to fifth embodiments is a cure system, and a method comprises i) adding the composition to a polyorganosiloxane formulation and ii) curing the polyorganosiloxane formulation to form a product selected from the group consisting of a coating, an adhesive, an elastomer, and a foam.

## Claims

1. A composition comprising a mixture of (A) a phosphonium catalyst comprising (i) a tetravalent monocation of phosphorus and (ii) a non-coordinating anion; (B) a polyorganohydrogensiloxane; and (C) a hydrocarbonoxy-functional organosilicon compound; wherein the composition is free of Lewis base.

2. The composition of claim 1, where (a) the tetravalent monocation of phosphorus is a Lewis acidic phosphorus cation of formula [PR¹₃R²]⁺, where each R² is independently selected from the group consisting of X', -CX'₃ , and -OR⁹, where each X' is independently selected from the group consisting of Br, Cl, and F, and R⁹ is an alkyl group or an aryl group; and each R¹ is an independently selected halogenated aryl group.

3. The composition of claim 2, where each R¹ has formula: 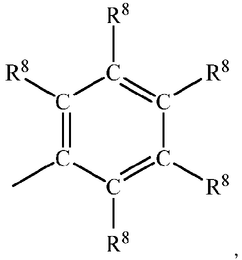 where each R⁸ is independently selected from H, X, and a group of formula -CX₃, where each X is a halogen independently selected from Br, Cl, or F; with the proviso that at least one R⁸ is not H.

4. The composition of claim 3, where each R⁸ is independently selected from the group consisting of H, Cl, F, and a group of formula -CF₃,

5. The composition of any one of claims 2 to 4, where (i) the tetravalent monocation of phosphorus has formula

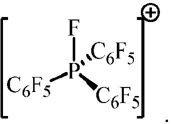

6. The composition of any one of claims 2 to 5, where (b) the anion has formula [BR³₄]^{-,} where each R³ is independently selected from the group consisting of a monovalent hydrocarbon group and a monovalent halogenated hydrocarbon group.

7. The composition of claim 6, where (b) the anion has formula B(C₆F₅)₄⁻.

8. The composition of any one of claims 1 to 7, where (B) the polyorganohydrogensiloxane comprises two or more siloxane units selected from HR⁴₂SiO_{1/2}, R⁴₃SiO_{1/2}, HR⁴SiO_{2/2}, R⁴₂SiO_{2/2}, R⁴SiO_{3/2}, HSiO_{3/2} and SiO_{4/2} units; wherein each R⁴ is an independently selected monovalent hydrocarbon group, which is free of aliphatic unsaturation.

9. The composition of claim 8, where (B) the polyorganohydrogensiloxane is selected from the group consisting of:
(B-1) a linear polyorganohydrogensiloxane comprising unit formula (HR ⁴₂SiO_{1/2})_{g}(R⁴₃SiO_{1/2})ₕ(R⁴₂SiO_{2/2})ᵢ(HR ⁴SiO_{2/2})ⱼ, where R⁴ is as described above, and subscripts g, h, i, and j have values such that g ≥ 0, h ≥ 0, a quantity (g + h) = 2, i ≥ 0, j ≥ 0, and a quantity (g + j) ≥ 1, and a quantity (i + j) is 0 to 1,000;
(B-2) a cyclic polyorganohydrogensiloxane comprising unit formula (R⁴₂SiO_{2/2})ᵤ(R⁴HSiO_{2/2})ᵥ, where R⁴ is as described above, subscript u is 0 or more, subscript v is 1 or more, a quantity (u + v) is 3 to 15, and each R⁴ is an independently selected monovalent hydrocarbon group; and
(B-3) a combination of both (B-1) and (B-2).

10. The composition of any one of claims 1 to 9, wherein (C) the hydrocarbonoxy-functional organosilicon compound has, an average, per molecule of at least 1 silicon-bonded group of the formula -OR⁵, wherein each R⁵ is an independently selected monovalent hydrocarbon group of 1 to 6 carbon atoms.

11. The composition of claim 10, wherein (C) the hydrocarbonoxy-functional organosilicon compound has a formula selected from the group consisting of:
(C-1) a hydrocarbonoxysilane of formula: R⁷_{(4-b)}Si(OR⁵)_{b}, where each R⁷ is independently selected from the group consisting of a monovalent hydrocarbon group and a monovalent halogenated hydrocarbon group, each R⁵ is the monovalent hydrocarbon group of 1 to 6 carbon atoms as described above, and subscript b is 1 to 4;
(C-2) a hydrocarbonoxy-functional organosiloxane oligomer or polymer comprising a group of formula: 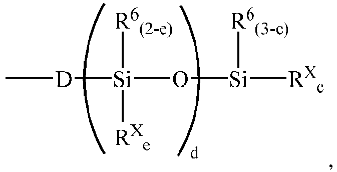 where each D independently represents an oxygen atom, a divalent hydrocarbon group, a divalent siloxane group, or a combination of a divalent hydrocarbon group and a divalent siloxane group; each R^{X} independently represents a group of the formula -OR⁵, wherein each R⁵ is as described above; each R⁶ is independently selected from the group consisting of a monovalent hydrocarbon group and a monovalent halogenated hydrocarbon group as described above for R⁵; subscript c represents 0, 1, 2, or 3; subscript e represents 0, 1, or 2; and subscript d has a value of 0 or greater, with the proviso that the sum of (e + c) is at least 1, such that, on average, at least one R^{X} is present in the formula; and
(C-3) a combination of (C-1) and (C-2).

12. The composition of claim 11, where (C-1) the hydrocarbonoxysilane is present and the hydrocarbonoxysilane has formula: R⁷SiOR⁵₃, where R⁷ is an alkyl group of 1 to 20 carbon atoms, and each R⁵ is an alkyl group of 1 to 4 carbon atoms.

13. The composition of any one of claims 1 to 12, further comprising (D) a solvent.

14. The composition of any one of claims 1 to 13, where the composition is free of transition metals.

15. A method comprising the steps of:
1) providing a composition according to any one of claims 1 to 14, and
2) heating the composition to a temperature sufficient to catalyze reaction of silicon bonded hydrogen atoms in (B) the polyorganohydrogensiloxane and silicon bonded hydrocarbonoxy groups in (C) the hydrocarbonoxy-functional organosilicon compound; and
optionally the method further comprises an additional step after step 1) and before step 2), wherein the additional step further comprises placing the composition in a mold or applying the composition on a substrate.

## Patentansprüche

1. Zusammensetzung, umfassend eine Mischung aus (A) einem Phosphoniumkatalysator, umfassend (i) ein vierwertiges Monokation von Phosphor und (ii) ein nicht-koordinierendes Anion; (B) einem Polyorganohydrogensiloxan; und (C) einer kohlenwasserstoffoxyfunktionellen Organosiliciumverbindung; wobei die Zusammensetzung frei von Lewis-Base ist.

2. Zusammensetzung nach Anspruch 1, wobei (a) das vierwertige Monokation von Phosphor ein Lewis-saures Phosphorkation der Formel [PR¹₃R²]⁺ ist, wobei jedes R² unabhängig ausgewählt ist aus der Gruppe, bestehend aus X', -CX'₃ und -OR⁹, wobei jedes X' unabhängig ausgewählt ist aus der Gruppe, bestehend aus Br, Cl und F, und R⁹ eine Alkylgruppe oder eine Arylgruppe ist; und jedes R¹ eine unabhängig ausgewählte halogenierte Arylgruppe ist.

3. Zusammensetzung nach Anspruch 2, wobei jedes R¹ die Formel aufweist: 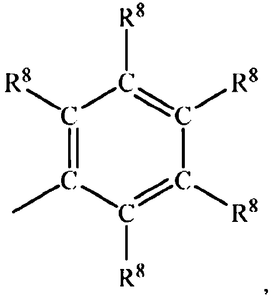 wobei jedes R⁸ unabhängig ausgewählt ist aus H, X und einer Gruppe der Formel -CX₃, wobei jedes X ein Halogen ist, das unabhängig ausgewählt ist aus Br, Cl oder F; mit der Maßgabe, dass mindestens ein R⁸ nicht H ist.

4. Zusammensetzung nach Anspruch 3, wobei jedes R⁸ unabhängig ausgewählt ist aus der Gruppe, bestehend aus H, Cl, F, und einer Gruppe der Formel -CF₃.

5. Zusammensetzung nach einem der Ansprüche 2 bis 4, wobei (i) das vierwertige Monokation von Phosphor die Formel 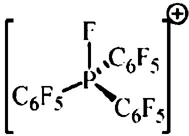 aufweist.

6. Zusammensetzung nach einem der Ansprüche 2 bis 5, wobei (b) das Anion die Formel [BR³₄]⁻ aufweist, wobei jedes R³ unabhängig ausgewählt ist aus der Gruppe, bestehend aus einer einwertigen Kohlenwasserstoffgruppe und einer einwertigen halogenierten Kohlenwasserstoffgruppe.

7. Zusammensetzung nach Anspruch 6, wobei (b) das Anion die Formel B(C₆F₅)₄⁻ aufweist.

8. Zusammensetzung nach einem der Ansprüche 1 bis 7, wobei (B) das Polyorganohydrogensiloxan zwei oder mehr Siloxaneinheiten umfasst, die ausgewählt sind aus HR⁴₂SiO_{1/2}-, R⁴₃SiO_{1/2}-, HR⁴SiO_{2/2}-, R⁴₂SiO_{2/2}-, R⁴SiO_{3/2}-, HSiO_{3/2}- und SiO_{4/2}-Einheiten; wobei jedes R⁴ eine unabhängig ausgewählte einwertige Kohlenwasserstoffgruppe ist, die frei von aliphatischer Ungesättigtheit ist.

9. Zusammensetzung nach Anspruch 8, wobei (B) das Polyorganohydrogensiloxan ausgewählt ist aus der Gruppe, bestehend aus:
(B-1) einem linearen Polyorganohydrogensiloxan, umfassend Einheitsformel (HR⁴₂SiO_{1/2})_{g}(R⁴₃SiO_{1/2})ₕ(R⁴₂SiO_{2/2})ᵢ(HR⁴SiO_{2/2})ⱼ, wobei R⁴ wie vorstehend beschrieben ist, und Indizes g, h, i und j Werte derart aufweisen, dass g ≥ 0, h ≥ 0, eine Menge (g + h) = 2, i ≥ 0, j ≥ 0, und eine Menge (g + j) ≥ 1 und eine Menge (i + j) von 0 bis 1000 ist;
(B-2) einem zyklischen Polyorganohydrogensiloxan, umfassend Einheitsformel (R⁴₂SiO_{2/2})ᵤ(R⁴HSiO_{2/2})ᵥ, wobei R⁴ wie vorstehend beschrieben ist, Index u 0 oder mehr ist, Index v 1 oder mehr ist, eine Menge (u + v) 3 bis 15 ist und jedes R⁴ eine unabhängig ausgewählte einwertige Kohlenwasserstoffgruppe ist; und
(B-3) einer Kombination von sowohl (B-1) als auch (B-2).

10. Zusammensetzung nach einem der Ansprüche 1 bis 9, wobei (C) die kohlenwasserstoffoxyfunktionelle Organosiliciumverbindung einen Durchschnitt pro Molekül von mindestens 1 siliciumgebundenen Gruppe der Formel -OR⁵ aufweist, wobei jedes R⁵ eine unabhängig ausgewählte einwertige Kohlenwasserstoffgruppe von 1 bis 6 Kohlenstoffatomen ist.

11. Zusammensetzung nach Anspruch 10, wobei (C) die kohlenwasserstoffoxyfunktionelle Organosiliciumverbindung eine Formel aufweist, die ausgewählt ist aus der Gruppe, bestehend aus:
(C-1) einem Kohlenwasserstoffoxysilan der Formel: R⁷_{(4-b)}Si(OR⁵)_{b}, wobei jedes R⁷ unabhängig ausgewählt ist aus der Gruppe, bestehend aus einer einwertigen Kohlenwasserstoffgruppe und einer einwertigen halogenierten Kohlenwasserstoffgruppe, wobei jedes R⁵ die einwertige Kohlenwasserstoffgruppe aus 1 bis 6 Kohlenstoffatomen wie vorstehend beschrieben ist, und Index b 1 bis 4 ist;
(C-2) einem kohlenwasserstoffoxyfunktionellen Organosiloxanoligomer oder -polymer, umfassend eine Gruppe der Formel: 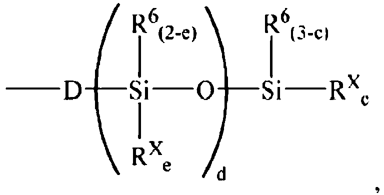 wobei jedes D unabhängig ein Sauerstoffatom, eine zweiwertige Kohlenwasserstoffgruppe, eine zweiwertige Siloxangruppe oder eine Kombination einer zweiwertigen Kohlenwasserstoffgruppe und einer zweiwertigen Siloxangruppe darstellt; jedes R^{X} unabhängig eine Gruppe der Formel -OR⁵ darstellt, wobei jedes R⁵ wie vorstehend beschrieben ist; jedes R⁶ unabhängig ausgewählt ist aus der Gruppe, bestehend aus einer einwertigen Kohlenwasserstoffgruppe und einer einwertigen halogenierten Kohlenwasserstoffgruppe, wie vorstehend für R⁵ beschrieben; der Index c 0, 1, 2 oder 3 darstellt; der Index b 0, 1 oder 2 ist; und der Index d einen Wert von 0 oder mehr aufweist, mit der Maßgabe, dass die Summe aus (e + c) mindestens 1 ist, derart, dass im Durchschnitt mindestens ein R^{X} in der Formel vorhanden ist; und
(C-3) einer Kombination von (C-1) und (C-2).

12. Zusammensetzung nach Anspruch 11, wobei (C-1) das Kohlenwasserstoffoxysilan vorhanden ist und das Kohlenwasserstoffoxysilan die Formel aufweist: R⁷SiOR⁵₃, wobei R⁷ eine Alkylgruppe aus 1 bis 20 Kohlenstoffatomen ist und jedes R⁵ eine Alkylgruppe aus 1 bis 4 Kohlenstoffatomen ist.

13. Zusammensetzung nach einem der Ansprüche 1 bis 12, ferner umfassend (D) ein Lösungsmittel.

14. Zusammensetzung nach einem der Ansprüche 1 bis 13, wobei die Zusammensetzung frei von Übergangsmetallen ist.

15. Verfahren, umfassend die Schritte:
1) Bereitstellen einer Zusammensetzung nach einem der Ansprüche 1 bis 14 und
2) Erhitzen der Zusammensetzung auf eine Temperatur, die ausreicht, um die Reaktion von siliciumgebundenen Wasserstoffatomen in (B) dem Polyorganohydrogensiloxan- und den siliciumgebundenen Kohlenwasserstoffoxygruppen in (C) der kohlenwasserstoffoxyfunktionellen Organosiliciumverbindung zu katalysieren; und
wahlweise umfasst das Verfahren ferner einen zusätzlichen Schritt nach Schritt 1) und vor Schritt 2), wobei der zusätzliche Schritt ferner das Platzieren der Zusammensetzung in einer Form oder das Aufbringen der Zusammensetzung auf ein Substrat umfasst.

## Revendications

1. Composition comprenant un mélange de (A) un catalyseur phosphonium comprenant (i) un monocation tétravalent de phosphore et (ii) un anion non coordonnant ; (B) un polyorganohydrogénosiloxane ; et (C) un composé organosilicium à fonctionnalité hydrocarbonoxy ; dans laquelle la composition est exempte de base de Lewis.

2. Composition selon la revendication 1, où le monocation tétravalent de phosphore (a) est un cation de phosphore acide de Lewis de formule [PR¹₃R²]⁺, où chaque R² est choisi indépendamment dans le groupe constitué de X', -CX'₃, et -OR⁹, où chaque X' est choisi indépendamment dans le groupe constitué de Br, CI, et F, et R⁹ est un groupe alkyle ou un groupe aryle ; et chaque R¹ est un groupe aryle halogéné choisi indépendamment.

3. Composition selon la revendication 2, où chaque R¹ a la formule : 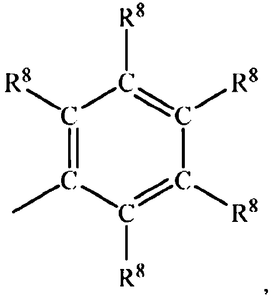 où chaque R⁸ est choisi indépendamment parmi H, X, et un groupe de formule -CX₃, où chaque X est un halogène choisi indépendamment parmi Br, Cl, ou F ; à condition qu'au moins un R⁸ ne soit pas H.

4. Composition selon la revendication 3, où chaque R⁸ est choisi indépendamment dans le groupe constitué de H, CI, F, et un groupe de formule -CF₃,

5. Composition selon l'une quelconque des revendications 2 à 4, où le monocation tétravalent de phosphore (i) a la formule

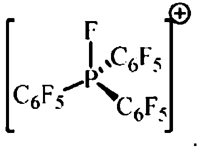

6. Composition selon l'une quelconque des revendications 2 à 5, où l'anion (b) a la formule [BR³₄]⁻, où chaque R³ est choisi indépendamment dans le groupe constitué d'un groupe hydrocarboné monovalent et d'un groupe hydrocarboné halogéné monovalent.

7. Composition selon la revendication 6, où l'anion (b) a la formule B(C₆F₅)₄⁻.

8. Composition selon l'une quelconque des revendications 1 à 7, où le polyorganohydrogénosiloxane (B) comprend deux motifs siloxane ou plus choisis parmi les motifs HR⁴₂SiO_{1/2}, R⁴₃SiO_{1/2}, HR⁴SiO_{2/2}, R⁴₂SiO_{2/2}, R⁴SiO_{3/2}, HSiO_{3/2} et SiO_{4/2} ; où chaque R⁴ est un groupe hydrocarboné monovalent choisi indépendamment, qui est exempt d'insaturation aliphatique.

9. Composition selon la revendication 8, où le polyorganohydrogénosiloxane (B) est choisi dans le groupe constitué de :
(B-1) un polyorganohydrogénosiloxane linéaire comprenant la formule unitaire (HR⁴₂SiO_{1/2})_{g}(R⁴₃SiO_{1/2})ₕ(R⁴₂SiO_{2/2})ᵢ(HR⁴SiO_{2/2})ⱼ, où R⁴ est tel que décrit ci-dessus, et les indices g, h, i, et j ont des valeurs telles que g ≥ 0, h ≥ 0, une quantité (g + h) = 2, i ≥ 0, j ≥ 0, et une quantité (g + j) ≥ 1, et une quantité (i + j) vaut de 0 à 1 000 ;
(B-2) un polyorganohydrogénosiloxane cyclique comprenant la formule unitaire (R⁴₂SiO_{2/2})ᵤ(R⁴HSiO_{2/2})ᵥ, où R⁴ est tel que décrit ci-dessus, l'indice u vaut 0 ou plus, l'indice v vaut 1 ou plus, une quantité (u + v) vaut de 3 à 15, et chaque R⁴ est un groupe hydrocarboné monovalent choisi indépendamment ; et
(B-3) une combinaison à la fois de (B-1) et (B-2).

10. Composition selon l'une quelconque des revendications 1 à 9, dans laquelle le composé organosilicium à fonctionnalité hydrocarbonoxy (C) a, en moyenne par molécule, au moins 1 groupe lié à du silicium de la formule -OR⁵, dans laquelle chaque R⁵ est un groupe hydrocarboné monovalent choisi indépendamment de 1 à 6 atomes de carbone.

11. Composition selon la revendication 10, dans laquelle le composé organosilicium à fonctionnalité hydrocarbonoxy (C) a une formule choisie dans le groupe constitué de :
(C-1) un hydrocarbonoxysilane de formule : R⁷_{(4-b)}Si(OR⁵)_{b}, où chaque R⁷ est choisi indépendamment dans le groupe constitué d'un groupe hydrocarboné monovalent et d'un groupe hydrocarboné halogéné monovalent, chaque R⁵ est un groupe hydrocarboné monovalent de 1 à 6 atomes de carbone tel que décrit ci-dessus, et l'indice b va de 1 à 4 ;
(C-2) un oligomère ou polymère organosiloxane à fonctionnalité hydrocarbonoxy comprenant un groupe de formule : 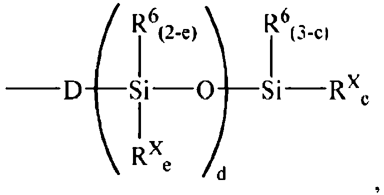 où chaque D représente indépendamment un atome d'oxygène, un groupe hydrocarboné divalent, un groupe siloxane divalent, ou une combinaison d'un groupe hydrocarboné divalent et d'un groupe siloxane divalent ; chaque R^{X} représente indépendamment un groupe de la formule -OR⁵, dans laquelle chaque R⁵ est tel que décrit ci-dessus ; chaque R⁶ est choisi indépendamment dans le groupe constitué d'un groupe hydrocarboné monovalent et d'un groupe hydrocarboné halogéné monovalent tel que décrit ci-dessus pou R⁵ ; l'indice c représente 0, 1, 2, ou 3 ; l'indice e vaut 0, 1, ou 2 ; et l'indice d a une valeur de 0 ou plus, à la condition que la somme de (e + c) vaille au moins 1, de telle sorte qu'en moyenne, au moins un R^{X} est présent dans la formule ; et
(C-3) une combinaison de (C-1) et (C-2).

12. Composition selon la revendication 11, où l'hydrocarbonoxysilane (C-1) est présent et l'hydrocarbonoxysilane a la formule : R⁷SiOR⁵₃, où R⁷ est un groupe alkyle de 1 à 20 atomes de carbone, et chaque R⁵ est un groupe alkyle de 1 à 4 atomes de carbone.

13. Composition selon l'une quelconque des revendications 1 à 12, comprenant en outre (D) un solvant.

14. Composition selon l'une quelconque des revendications 1 à 13, où la composition est exempte de métaux de transition.

15. Procédé comprenant l'étape consistant à :
1) fournir une composition selon l'une quelconque des revendications 1 à 14, et
2) chauffer la composition à une température suffisante pour catalyser une réaction d'atomes d'hydrogène liés à du silicium dans le groupe polyorganohydrogénosiloxane (B) et de groupes hydrocarbonoxy liés à du silicium dans le composé organosilicium à fonctionnalité hydrocarbonoxy (C) ; et
facultativement, le procédé comprend en outre une étape supplémentaire après l'étape 1) et avant l'étape 2), dans lequel l'étape supplémentaire comprend en outre la mise en place de la composition dans un moule ou l'application de la composition sur un substrat.
